# EUROPEAN PATENT APPLICATION

(11) **EP 1 923 977 A1**
(43) Date of publication of application: **21.05.2008**
(21) Application number: 06810166.6
(22) Date of filing: 08.09.2006
(51) Int. Cl.: H02K 1/18, H02K 1/02, H02K 1/04, H02K 1/16

(54) **STATOR CORE, MOTOR USING THE STATOR CORE, AND METHOD OF MANUFACTURING THE STATOR CORE**

(30) Priority: 08.09.2005 JP 2005260370
(71) Applicant: TOYOTA JIDOSHA KABUSHIKI KAISHA, Toyota-shi Aichi 471-8571 (JP)
(72) Inventor: ENDO, Yasuhiro, c/o TOYOTA JIDOSHA KABUSHIKI KAISHA, Toyota-shi, Aichi 471-8571 (JP); MIZUTANI, Ryoji, c/o TOYOTA JIDOSHA KABUSHIKI KAISHA.K., Toyota-shi, Aichi 471-8571 (JP); TATEMATSU, Kazutaka, c/o TOYOTA JIDOSHA KABUSHIKI KAISHA, Toyota-shi, Aichi 471-8571 (JP)
(74) Representative: TBK-Patent
(86) International application number: PCT/JP2006/318322
(87) International publication number: WO 2007/029886

(57) **Abstract**

A stator core includes a pressurized powder core section which is produced by compression-molding a magnetic powder covered by an insulation coating. At least a portion of the pressurized powder core section forms at least a part of a winding slot section around which a winding is wrapped. The pressurized powder core section comprises a winding guide groove which prevents the winding from deviating along the extending direction of the winding slot section. As a result, a space factor of the winding can be increased, to thereby further improve motor output.

## Description

### TECHNICAL FIELD

The present invention relates to a stator core in which a space factor of a winding is increased, to a motor using the stator core, and to a method of manufacturing the stator core.

### BACKGROUND ART

In recent years, there has been a growing demand for size reduction and performance enhancement of motors. As one measure to address the demand, a method involving increasing a space factor of a winding has been known. When the space factor of a winding wound around a stator core is increased to thereby enhance the efficiency of excitation per unit volume, output of a motor can be improved.

Japanese Patent Publication JP 2002-369418 discloses, as shown in a cross-sectional view of Fig. 6, a stator core 10 configured with a tooth 12 which is formed in such a manner that a width dimension of the tooth 12 is gradually decreased from an outer circumference side to an inner circumference side of a stator. The stator core 10 is described as a structure including the tooth 12 in which a stacked core part 12a which is produced by laminating a material having high magnetic permeability such as magnetic steel sheets is bonded to a core end part 12b having a winding receiving surface which functions as a guide when a winding is wound around both ends of the stacked core part 12a in its stacking direction. An insulation cap 16 composed of an insulating material is mounted on the tooth 12 composed of the stacked core part 12a and the core end part 12b in order to maintain electrical insulation between the winding 14 and the tooth 12.

On the other hand, Japanese Patent Publication JP 2004-140964 discloses a stator core having an insulator which is installed in a tooth, wound by a winding, and provided with guide slots used for installing the winding in an aligned state. The guide slots are disposed on side faces of a winding slot part of the insulator in a depressed shape extending along an axial direction and also disposed on end faces of the winding slot part along a circumferential direction so as to communicate with the corresponding guide slots disposed on the both side faces.

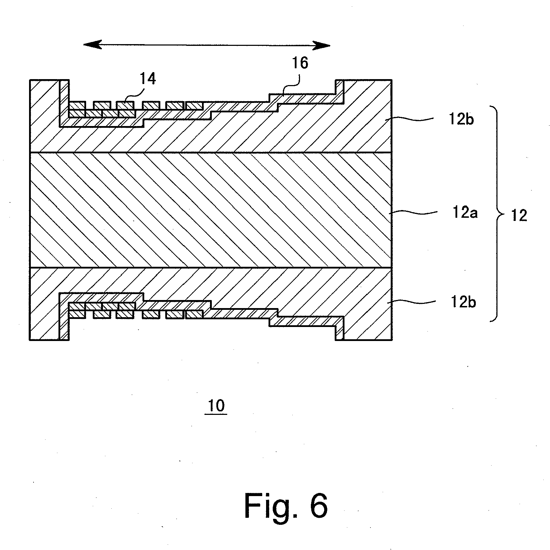

Although the core end part 12b constituting the tooth 12 includes the winding receiving surface on which steps are formed to define a housing space of the winding 14, mere provision of these steps is not sufficient to prevent deviation of the winding wound around the tooth from occurring in an extending direction of the winding slot part (an arrow direction in the figure). Fig. 6 shows the cross-sectional view of the stator core 10 described in the first-noted Patent Document taken along the extending direction of the winding slot part (the arrow direction in the figure). As shown in Fig. 6, in the process of winding the winding 14 around the tooth 12, the winding 14 is deviated along the extending direction of the winding-slot part, which makes it almost impossible to install the tightly-wound winding 14. Accordingly, there has been a problem that a space factor of the winding 14 is reduced in the winding slot part.

The insulation cap 16 independent of the tooth 12 is produced and attached to the tooth 12. In such a structure that the insulation cap 16 produced independently of the tooth 12 is attached to the tooth 12 at a later time, the proportion of space occupied by the insulation cap 16 in the winding slot part of the tooth 12 is increased because it is necessary to increase the thickness of the insulation cap 16. In particular, when the steps for defining the housing space of the winding 14 or the guide slots for aligning the winding are provided to the insulation cap 16 as described in the above-noted two patent publications, the thickness of the insulation cap 16 will inevitably be increased, thereby reducing the space factor of the winding 14 which can be installed in the tooth 12. Further, because finishing accuracy of the tooth 12 and the insulation cap 16 is approximately 0.05 mm, it is necessary that a clearance of 0.1 mm or greater be established in order to mount the insulation cap 16 on the tooth 12. Also for this reason, the space factor of the winding 14 installable to the tooth 12 is reduced. As a consequence, it becomes impossible to further improve motor output.

### DISCLOSURE OF THE INVENTION

The present invention provides a stator core including a pressurized powder core section produced by compression molding a magnetic power covered with an insulation coating. In the stator, at least a part of the pressurized powder core section constitutes at least in part a winding slot section around which a winding is wound, and the pressurized powder core section includes a winding guide groove to prevent deviation of the winding from occurring along an extending direction of the winding slot section.

### BRIEF DESCRIPTION OF THE DRAWINGS

Fig. 1 is a plan view showing a configuration of a motor according to an embodiment of the present invention.
Fig. 2 is a perspective view showing a configuration of a tooth according to the embodiment of the present invention.
Fig. 3 is a diagram showing a magnetic steel sheet which forms a main core section in a stator core.
Fig. 4 is a cross-sectional view for explaining a shape of the stator core according to the embodiment of the present invention.
Fig. 5 is a cross-sectional view for explaining a shape of a tooth according to the embodiment of the present invention.
Fig. 6 is a cross-sectional view showing a configuration of a related art stator core.

### BEST MODE FOR CARRYING OUT THE INVENTION

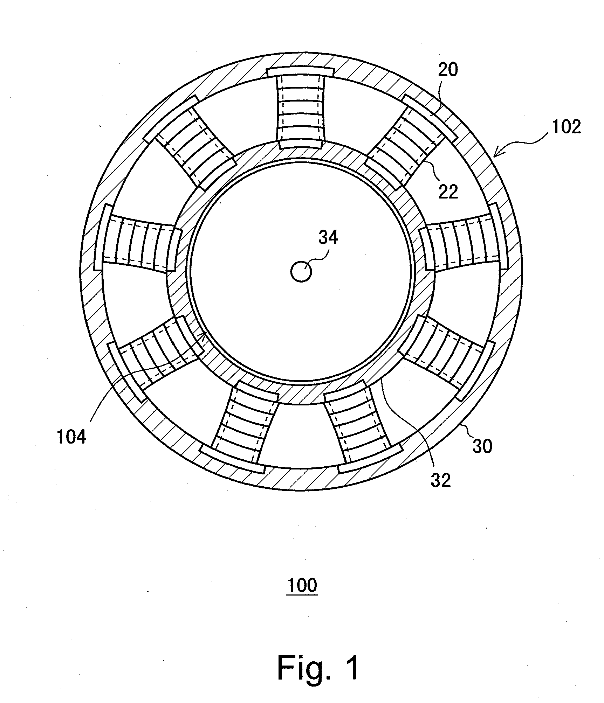

Fig. 1 shows a cross-sectional plan view showing an inside of a motor 100 according to an embodiment of the present invention. The motor 100 according to the embodiment of the present invention comprises, as shown in Fig. 1, a stator 102 and a rotor 104. The rotor 104 is installed via a bearing or the like to a rotating axis 34 and disposed so as to be rotatable using the rotating axis 34 as a central axis. The stator 102 comprises an inner core 32 disposed so as to surround the perimeter of the rotor 104, a plurality of stator cores 20 disposed at substantially regular intervals along an outer circumference of the inner core 32, and an outer core 30 disposed so as to surround outer circumferences of the stator cores 20. The stator cores 20, the inner core 32, and the outer core 30 are each formed using a magnetic material having high magnetic permeability as the primary component.

A winding 22 is wound around each of the stator cores 20. When currents are passed through the windings 22 wound around the stator cores 20, magnetic fields are generated inside the stator 102. Electromagnetic interaction with the magnetic fields causes the rotor 104 to rotate about the rotating axis 34.

The stator cores 20 comprise teeth and insulating resins. The teeth are provided to effectively direct the magnetic fields generated by the windings 22 wound around the stator cores 20 toward the inside of the stator 102. The teeth are composed of high-permeability material having excellent magnetic permeability. The teeth are electrically insulated from the windings 22 by the insulating resins.

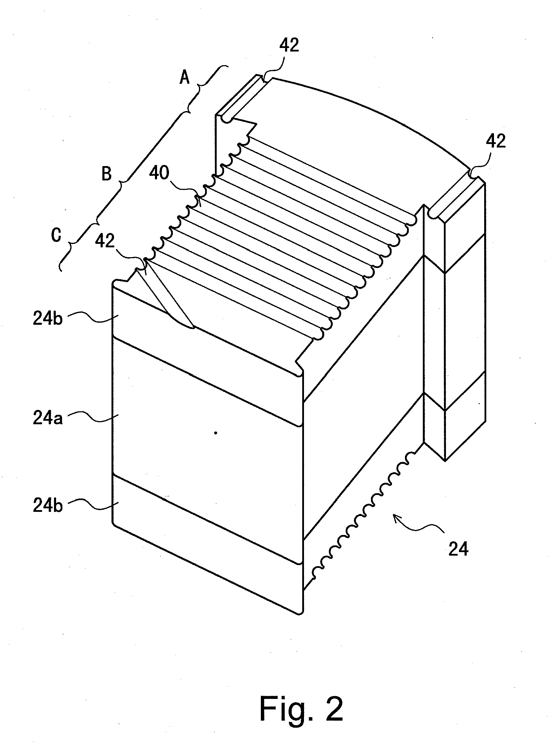

As shown in Fig. 2, the tooth 24 may have a structure divided into a main core section 24a and pressurized powder core sections 24b. For example, the pressurized powder core sections 24b are disposed so as to hold the main core section 24a from upper and lower sides. The tooth 24 has a shape consisting of a flange section A, a winding slot section B, and a terminal section C. The flange section A and the terminal section C are adjoining sections adjacent to the winding slot section B. The winding slot section B is disposed so as to protrude from the flange section A, and the winding 22 is wound around the winding slot section B. In this embodiment, the winding slot section B in the pressurized powder core section 24b has winding guide grooves 40 designed to install the winding 22 in an aligned state.

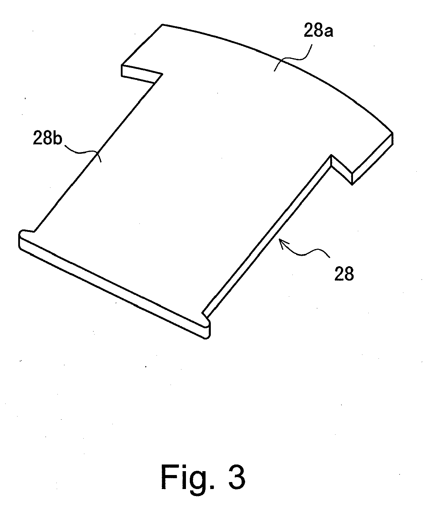

The main core section 24a is produced, as shown in Fig. 3, by stacking a plurality of high-permeability plates 28 formed of magnetic steel sheets or the like which are die-cut in the shape of a deformed sector. A flange section 28a extended so as to form a T-shape is attached to at least one end of the sector-shaped high-permeability plates 28. When the main core section 24a is configured by laminating such high-permeability plates 28, the flange section 28a constitutes a region corresponding to the flange section A of the tooth 24. A projecting section 28b which projects from the flange section 28a constitutes a region corresponding to the winding slot section B around which the winding 22 is wound.

Further, when the high-permeability plates 28 are stacked, it is preferable that the high-permeability plates 28 are electrically insulated from each other, to thereby prevent an eddy current from flowing across the high-permeability plates 28. For example, an insulating resign layer may preferably be inserted between the high-permeability plates 28.

The pressurized powder core section 24b is produced by introducing a magnetic powder which is a material having high magnetic permeability, and compression-molding the magnetic powder in a pressing machine or other machines. As the magnetic powder, iron powder which has a grain size of approximately 50 ~ 500 µm and an outer surface treated by insulation treatment such as phosphate coating, for example, may be used. When the pressurized powder core section 24b is formed by compacting the insulation coated magnetic powder as described above, the external shape of the tooth 24 can be formed with a high degree of accuracy. In addition, occurrence of eddy current inside the tooth 24 can be prevented.

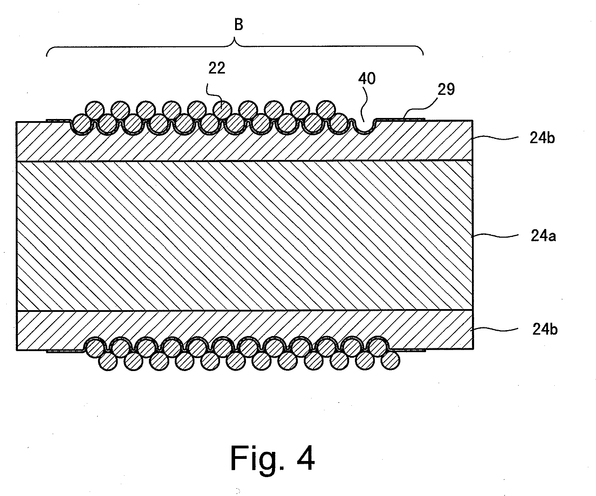

Fig. 4 shows a cross-sectional view of the stator core 20 taken along an extending direction of the winding slot section B. As shown in Fig. 4, winding guide grooves 40 designed to install the winding 22 in the aligned state are formed on the region corresponding to the winding slot section B of the pressurized powder core section 24b. It is preferable that the winding guide grooves 40 are extended along a direction that intersects the extending direction of the winding slot section B. The cross-sectional shape of the winding guide grooves 40 is defined to match a cross-sectional shape of the winding, thereby configuring the winding guide grooves 40 such that the winding can be fitted therein. With this configuration, it becomes possible to install the winding in the winding slot section B without deviation in the extending direction of the winding slot section B. Further, at least a portion of the surface of the pressurized powder core section 24b may be covered by a coating formed of an insulation material.

In order to more clearly depict the winding guide grooves 40, the winding 22 installed in the winding guide grooves 40 is shown partially removed in the stator core 20 depicted in Fig. 4. The shape in which the winding guide grooves 40 are formed is such that it prevents the winding 22 from deviating in a projecting direction of the pressurized powder core section 24b, i.e. the extending direction of the winding slot section B.

As shown in the cross-sectional view of Fig. 4, for example, the winding guide grooves 40 having a concave shape are disposed, at predetermined intervals, adjacent to each other along the direction that intersects the projecting direction of the pressurized powder core section 24b over the outer surface of the pressurized powder core section 24b. The cross-sectional shape of the winding guide grooves 40 is preferably formed in a shape matching the cross section of the winding 22. When the winding 22 is circular in cross section, for example, the winding guide grooves 40 are defined, as shown in Fig. 4, to have a semicircular cross section. As a result, during the process of winding the winding 22 around the winding slot section B of the tooth 24, because the winding 22 is fitted in the winding guide grooves 40 only by wrapping the winding 22 along the winding guide grooves 40, deviation of the winding 22 in the extending direction of the winding slot section B is suppressed, to thereby enable installation of the winding 22 tightly wound in the extending direction of the winding slot section B. Therefore, the space factor of the winding 22 can be increased.

Further, as shown in Fig. 2, it is also preferable that a slot 42 used for pulling out the winding 22 is formed on appropriate regions corresponding to the flange section A and the terminal section C adjacent to the winding slot section B in the pressurized powder core section 24b. The pull-out slot 42 is formed on at least one of the adjoining sections in the pressurized powder core section 24b. Similarly to the winding guide grooves 40, it is preferable that a cross-sectional shape of the pull-out slot 42 be formed in a shape matching the cross section of the winding 22. In the process to wind the winding 22 around the winding slot section B of the tooth 24, because the winding 22 is fitted into the pull-out slot 42 by installing an end part of the winding 22 along the pull-out slot 42, the end part of the winding can be fixed at the start or end of the winding 22, which can facilitate implementation of the process to wind the winding 22. Thus, the winding 22 can be mounted on the winding slot section B with a high degree of accuracy.

The tooth 24 is composed of a combination of the main core section 24a and the pressurized powder core sections 24b. The main core section 24a is bonded to the pressurized powder core sections 24b by means of a structural "fit", an adhesive agent made of an epoxy resin, or the like. The winding guide grooves 40 may be formed on both of the pressurized powder core sections 24b constituting the upper and the lower portions of the tooth 24, or formed on either one of the pressurized powder core sections 24b. When the winding guide grooves 40 are formed on both of the pressurized powder core sections 24b, it is preferable that concave regions of the winding guide grooves 40 are shifted by one-half pitch between the upper and lower pressurized powder core sections 24b as shown in Fig. 4. In this way, at the time of winding the winding 22 around the winding slot section B of the tooth 24, it becomes possible to wind the winding 22 while slightly shifting the winding 22 along the extending direction of the winding slot section B.

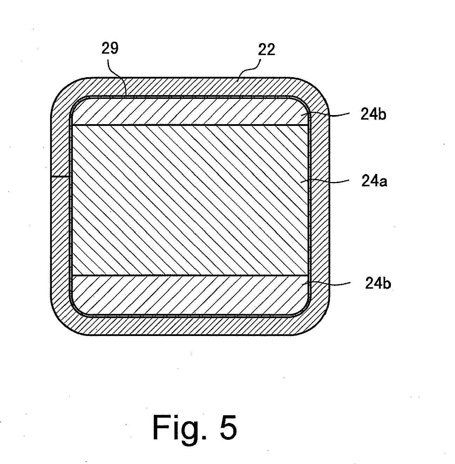

Fig. 5 shows a cross-sectional view of the tooth 24 taken along a direction orthogonal to the extending direction of the winding slot section B. As shown in Figs. 4 and 5, at least a part of the surface of the tooth 24 is covered with a coating 29 formed of an insulating material. The coating 29 is formed at least on a surface of the winding slot section B in the tooth 24, to thereby electrically insulate the winding 22 from the tooth 24.

In view of improvement in slidability of the winding 22 when the winding 22 is installed following the winding guide grooves 40, it is preferable that the coating 29 be composed mostly of an insulating material having properties of high strength and high slidability. For example, an insulating material, such as epoxy resin, silicon oxide, ceramic, or DLC (Diamond Like Carbon), may preferably be used. Because such an insulating material is coated on the winding slot section B of the tooth 24 using electrodeposition, a coating 29 having a film thickness of 0.1 mm or smaller and properties of high strength and high slidability can be formed.

As described above, when, in conjunction with application of the coating 29 composed of the insulating material on the surface of the tooth 24, the winding guide grooves 40 and the pull-out slots 42 are formed on the tooth 24 itself, the space factor of an insulating section relative to the space in the winding slot section B can be made smaller than that obtained through a conventional insulating method using an insulation cap. Then, because decreasing the space occupied by the conventional insulating section becomes smaller correspondingly increases the space wherein the winding 22 may be installed, the space factor of the winding 22 in the winding slot section B can be made greater than that of a conventional winding. As a consequence, the motor can yield an output greater than that of a conventional motor.

As described in the above example, in which the structure of the tooth 24 is separated into the pressurized powder core sections 24b produced by compression molding the magnetic powder and the main core section 24a produced by laminating magnetic steel sheets, a complex shaped portion of the tooth 24 including the winding guide grooves 40 can be simply and easily formed as the pressurized powder core sections 24b through compression molding using a molding die, while a relatively simply shaped portion of the tooth 24 can be formed acting as the main core section 24 less expensively by laminating a plurality of magnetic steel sheets.

Thus, a motor comprising the stator 102, which has the stator cores 20 and the rotor 104 which is rotated due to electromagnetic interaction with the magnetic fields generated by currents passing through the windings installed in the stator cores 20, can produce an output greater than that of a conventional motor.

It should be noted that the present invention is not limited to the example described above. For example, the tooth may be configured by only one of a stacked core composed of magnetic steel sheets or a pressurized powder core section composed of a compression-molded magnetic powder. In addition, just one of either the winding guide grooves or the pull-out slots may be formed on the tooth.

## Claims

1. A stator core comprising:
a pressurized powder core section produced by compression molding a magnetic powder covered with an insulation coating, wherein
at least a part of the pressurized powder core section constitutes at least in part a winding slot section around which a winding is wound;
the pressurized powder core section includes a winding guide groove for preventing deviation of the winding along an extending direction of the winding slot section.

2. The stator core according to Claim 1, wherein the winding guide groove is disposed so as to extend in a direction which crosses the extending direction of the winding slot section.

3. The stator core according to Claim 1, wherein at least a portion of the surface of the pressurized powder core section is covered with a coating composed of an insulating material.

4. The stator core according to Claim 2, wherein at least a portion of the surface of the pressurized powder core section is covered with a coating composed of an insulating material.

5. The stator core according to Claim 1, further comprising:
a main core section configured by laminating magnetic steel sheets, wherein
the pressurized powder core section is combined with the main core section to constitute the stator core.

6. The stator core according to Claim 2, further comprising:
a main core section configured by laminating magnetic steel sheets, wherein
the pressurized powder core section is combined with the main core section to constitute the stator core.

7. The stator core according to Claim 3, further comprising:
a main core section configured by laminating magnetic steel sheets, wherein
the pressurized powder core section is combined with the main core section to constitute the stator core.

8. The stator core according to Claim 4, further comprising:
a main core section configured by laminating magnetic steel sheets, wherein
the pressurized powder core section is combined with the main core section to constitute the stator core.

9. A motor comprising:
a stator which includes a stator core having a pressurized powder core section produced by compression molding a magnetic powder covered with an insulation coating, at least a portion of the pressurized powder core section constituting at least in part a winding slot section around which a winding is wound, and the pressurized powder core section having a winding guide groove for preventing deviation of the winding along an extending direction of the winding slot section; and
a rotor which rotates as a result of electromagnetic interaction with a magnetic field generated by a current that is passed through the winding mounted on the stator core.

10. A stator core, comprising:
a pressurized powder core section produced by compression molding a magnetic powder covered by an insulation coating,
a slot section around which a winding is wound, and
an adjoining section adjacent to the slot section, wherein
the adjoining section has a concave section corresponding to the winding.
